# EUROPEAN PATENT APPLICATION

(11) **EP 4 082 806 A1**
(43) Date of publication of application: **02.11.2022**
(21) Application number: 21171596.6
(22) Date of filing: 30.04.2021
(51) Int. Cl.: B43K 5/00, B43K 7/00, B43K 8/00, B43K 21/00

(54) **SELF-DISINFECTING WRITING INSTRUMENT**

(71) Applicant: BIC Violex Single Member S.A., 14569 Anoixi (GR)
(72) Inventor: KOKOZIDIS, Michail, 145 69 Anoixi (GR)
(74) Representative: Peterreins Schley

(57) **Abstract**

The present disclosure relates to a writing instrument. The writing instrument comprises a self-disinfecting material. The self-disinfecting material comprises a polymer, a photosensitizing additive configured to convert oxygen to a reactive oxygen species when exposed to light, and a light scattering component.

## Description

### Technical Field

The present invention relates to the field of writing instruments. More specifically, the present invention relates to self-disinfecting writing instruments.

### Background

Writing instruments are some of the most commonly used stationary items. Writing instruments may be used in a variety of situations and shared between individuals. For example, during parcel delivery the parcel recipient may be required to acknowledge receipt by signing a digital form with a stylus carried by the courier. However the stylus may be contaminated during use and by being passed between a multitude of recipients and the courier, the stylus may become a transmission vehicle for pathogens. Similarly, pencils or pens may be used in hospitals, e.g. by physicians to take notes during the doctor's visit or by patients to fill forms. However, writing instruments used in this setting may become a vehicle for nosocomial infections.

Manufacturers of stationary items have tried to address the problem of writing instrument becoming contaminated by pathogens, e.g. by including antimicrobial substances such as antibiotics, metal-ions or bleaches, in the writing instruments. However, existing solutions addressing contaminations all have certain short-comings. For example, antibiotics may only work against bacteria, thus antibiotics may not prevent infections caused by e.g. viruses. Further, the use of antibiotics may promote the development of multidrug resistant bacteria. Metal-ions or bleaches may be harmful to the environment, in particular after disposal of the writing instrument.

Further, most commonly the antimicrobial substances are applied on the writing instrument as a coating. As a result, the antimicrobial substances may be removed from the writing instrument, e.g. by chipping, and the subsequently exposed surface may not provide an antimicrobial action.

An alternative method is the inactivation of pathogens by UV-light. However, this may require specialized equipment and a shielded environment, as the UV-light may be hazardous to the user. The sterilization of writing instruments by UV-light can therefore not be performed efficiently throughout the day.

The present disclosure aims to address one or more of the problems in the prior art.

### Summary of the Invention

According to a first aspect, the present disclosure relates to a writing instrument. The writing instrument comprises a self-disinfecting material. The self-disinfecting material comprises a polymer, a photosensitizing additive configured to convert oxygen to a reactive oxygen species when exposed to light, and a light scattering component.

In some embodiments the photosensitizing additive may comprise a metal or metal-complex.

In some embodiments the metal complex may comprise a molybdenum complex, in particular hexanuclear molybdenum iodide.

In some embodiments the metal may be in particular gold.

In some embodiments the photosensitizing additive may be from a plant source.

In some embodiments the photosensitizing additive from a plant source, may be in particular curcumin.

In some embodiments the photosensitizing additive may comprise a macrocyclic organic compound.

In some embodiments the photosensitizing additive may be in particular crystal violet.

In some embodiments the photosensitizing additive may be present in the form of particles.

In some embodiments the photosensitizing additive may be bound to a polymer-chain, in particular by a covalent bond.

In some embodiments the polymer-chain may be a polyethylene-chain or a polystyrene chain.

In some embodiments the photosensitizing additive may be distributed homogenously within the self-disinfecting material.

In some embodiments the distribution of the photosensitizing additive particles may be adjusted by vibration treatment.

In some embodiments the reactive oxygen species may comprise a reactive molecule and/or free radical derived from oxygen, in particular superoxide, hydrogen peroxide, a hydroxyl radical, hydroxyl and/or nitric oxide.

In some embodiments the light scattering component may be the polymer.

In some embodiments the light scattering component may be a light scattering additive.

In some embodiments the light scattering additive may be di-2-ethylhexylphthalate, silicium dioxide, polysiloxane, titanium dioxide and/or mixtures thereof.

In some embodiments the light scattering additive may be present in the form of scattering centres, in particular in the form of particles.

In some embodiments the light scattering centres may be distributed homogenously within the self-disinfecting material.

In some embodiments the distribution of the light scattering centres may be adjusted by vibration treatment.

In some embodiments the photosensitizing additive may be configured to convert oxygen to a reactive oxygen species when exposed to ambient light.

In some embodiments the photosensitizing additive may be configured to convert oxygen to a reactive oxygen species when exposed to visible light and/or UV-light and in particular when exposed to visible light.

In some embodiments at least part of the ambient light may be sun light and/or reflections thereof.

In some embodiments at least part of the ambient light may be emitted from an electric light, e.g. LEDs, fluorescent lamps, and/or incandescent light bulbs and/or reflections thereof.

In some embodiments the polymer may be a thermoplastic polymer. More specifically, the polymer may be chosen from styrene homopolymers and/or copolymers of styrene, or polyolefins, such as polystyrene, acrylonitrile butadiene styrene or polypropylene.

In some embodiments the polymer may be a hard polymer, in particular polystyrene, acrylonitrile butadiene styrene or polypropylene.

In some embodiments the hard polymer has a Rockwell R hardness between about 60 and about 120, more specifically between about 65 and about 115, and in particular between about 70 and 110.

In some embodiments the polymer may be transparent or translucent.

In some embodiments the polymer may be transparent or translucent in the wavelength range of visible light, in particular between about 400 to about 800 nm.

In some embodiments the polymer may be transparent or translucent at least at one wavelength, at which the light is able to activate the photosensitizing additive to convert oxygen to a reactive oxygen species.

In some embodiments the polymer may comprise polystyrene, polyethylene or mixtures thereof.

In some embodiments the light scattering additive may be immiscible with the polymer.

In some embodiments the light scattering additive particles may be dispersible within the polymer.

In some embodiments the oxygen converted to a reactive oxygen species may be molecular oxygen.

In some embodiments the writing instrument may comprise at least one self-disinfecting surface, wherein the at least one self-disinfecting surface is configured to be in contact with ambient air.

In some embodiments the exposure of a self-disinfecting surface to ambient air and light, may inactivate pathogens present on the self-disinfecting surface, in particular bacteria, viruses and/or fungi.

In some embodiments at least one self-disinfecting surface or parts thereof may be exposed to light and wherein, the self-disinfecting material is configured to scatter part of the light to another self-disinfecting surface or parts thereof.

In some embodiments at least one self-disinfecting surface or parts thereof may be exposed to light and wherein, the self-disinfecting material is configured to scatter part of the light to parts of the self-disinfecting surface not directly exposed to light.

In some embodiments after 60 minutes of exposure of the writing instrument to ambient light, at least 60%, more specifically at least 75% and in particular at least 90% of bacteria may be inactivated on the self-disinfecting surface.

In some embodiments after 60 minutes of exposure to ambient light, at least 60%, more specifically at least 75% and in particular at least 90% of viruses may be inactivated on the surface of the self-disinfecting material in contact with ambient air.

In some embodiments the writing instrument may comprise one or more of the following writing instrument parts:
a main body, a cap, a case/sleeve, an ink cartridge, a plug and/or a click button.

In some embodiments at least one of the writing instrument parts may comprise the self-disinfecting material.

In some embodiments the writing instrument may comprise one or more of the following writing instrument parts:
a main body, a cap, a case/sleeve, a lead, a plug and/or a click button.

In some embodiments at least one of the writing instrument parts may comprise the self-disinfecting material.

In some embodiments the writing instrument may be a stylus.

According to a second aspect, the present disclosure relates to a process for producing writing instrument parts comprising a self-disinfecting material. The process comprises a polymer being mixed with a photosensitizing additive to create a self-disinfecting material feedstock. Optionally adding a light scattering additive to the self-disinfecting material feedstock. Optionally adjusting the position and/or volume of the photosensitizing additive and/or light scattering additive in the self-disinfecting material feedstock. Extruding or injection molding the self-disinfecting feedstock into a shape.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

As previously mentioned, writing instruments may be contaminated by pathogens and may become a transmission vehicle for pathogens. As a result, writing instruments are a possible source of infection, e.g. smear infections.

The present disclosure relates to a new principle of inactivating pathogens present on a writing instrument by including a photosensitizing additive. The photosensitizing additive may convert oxygen into a reactive oxygen species when exposed to light. The generated reactive oxygen species may then inactivate pathogens.

Further, the efficiency of the photosensitizing action of the writing instrument may be increased by including a light scattering component. Parts of the writing instrument may not be exposed to light, e.g. by partly placing the writing instrument inside a pocket or by placing the writing instrument on a table, thereby exposing only one side to light. A light scattering component comprised within the writing instrument may scatter light to parts not directly exposed to light, thus enabling the photosensitizing additive to convert oxygen to a reactive oxygen species in areas not directly exposed to light.

Accordingly, in a first aspect, the present disclosure relates to a writing instrument. The writing instrument comprises a self-disinfecting material. The self-disinfecting material comprises a polymer, a photosensitizing additive configured to convert oxygen to a reactive oxygen species when exposed to light, and a light scattering component.

The writing instrument according to the first aspect, may operate according to the following procedure. The writing instrument is used for writing. The writing instrument is placed at least partially exposed to light. The light scattering component distributes the light or parts thereof to parts of the writing instrument not exposed to light. The photosensitizing additive converts oxygen, in particular oxygen in ambient air, to a reactive oxygen species. The reactive oxygen species inactivates pathogens present on the writing instrument.

Within this disclosure, the term "self-disinfecting material" shall refer to a material which incorporates a functionality for at least partly inactivating one or more types of pathogens. The self-disinfecting material may rely partly on external influences, e.g. light, for its mode of action.

A photosensitizing additive is an additive which can absorb light and transfer the energy from the incident light into a nearby molecule. Without wishing to be bound by theory, a photosensitizing additive may absorb photons from incident light and promote a ground state electron into an excited singlet state, which may flip its intrinsic state via intersystem crossing to become an excited triplet state electron. The excited electron may transfer its energy to a nearby molecule. The photosensitizer may subsequently return to its initial state, remaining chemically unchanged from the process.

In some embodiment the photosensitizing additive may comprise a metal or metal-complex. Advantageously, the photosensitizing additive may comprise a metal-complex. The term metal-complex within this disclosure may refer to compounds comprising a metal or transition metal element and a non-metallic element. Metal-complexes may be for example metal cluster compounds, coordination complexes, chalcogenides, oxides, sulfides etc. In particular, a metal complex can be defined as a metal or ion in the center, surrounded by ligands. Such metal complex can be positively charged, neutral, or negatively charged. More specifically, the metal can be chosen from transition metals, i.e. d-block metals, more specifically metals of Group 6 of Mendeleev table, such as molybdenum or chromium.

In some embodiments, the metal complex can be inorganic metal complex or organometallic complex.

In some embodiments the metal complex may comprise a molybdenum complex, in particular hexanuclear molybdenum iodide. In some embodiments, the metal complex may comprise a chromium complex, in particular a tris(N,N-diimine)chromium(iii) complex. In some embodiments the metal may be in particular gold. Metals and metal-complexes may be advantageous photosensitizing agents, as they may be resistant to heat and may not break down during processing of the self-disinfecting material, e.g. during injection molding or extrusion.

In some embodiments the photosensitizing additive may be from a plant source. In some embodiments the photosensitizing additive from a plant source, may be in particular curcumin. Photosensitizing additives from plant sources may be inexpensive, abundantly available and may not pose an environmental or health risk.

In some embodiments the photosensitizing additive may comprise a macrocyclic organic compound. The macrocyclic organic compounds may be porphyrin and/or phthalocyanine. Porphyrin and phthalocyanine are used for photodynamic therapies, wherein tumors may be damaged or destroyed by the generation of reactive oxygen species. However, porphyrin and phthalocyanine may lose their photosensitizing properties more rapidly compared to other photosensitizers.

In some embodiments the photosensitizing additive may be in particular crystal violet.

In some embodiments the photosensitizing additive may be present in the form of particles. Particles may be advantageous, as they may be efficiently dispersible within self-disinfecting material. In particular, particles stable at temperatures above the polymer's melting point or glass transition temperature may be advantageous, as it may allow efficiently dispersing the particles in the polymer in a malleable or liquid state.

In some embodiments the photosensitizing additive may be bound to a polymer-chain, in particular by a covalent bond. In some embodiments the polymer-chain may be in particular polyethylene-chain or polystyrene-chain. Binding the photosensitizing additive to a polymer-chain may be advantageous as it may facilitate production of the self-disinfecting material, e.g. by providing a masterbatch material which may be compounded with the polymer. Alternatively, the photosensitizing additive may also be bound to the polymer, which may render unnecessary manufacturing steps involving adding and/or distributing the photosensitizing additive within the polymer.

In some embodiments the photosensitizing additive may be applied to the writing instrument as a coating. A coating may be applied to the writing instrument after manufacturing steps involving increased temperatures, e.g. extrusion or injection molding. Therefore, a coating may comprise heat sensitive compounds, e.g. heat sensitive photosensitizing additives, which may degrade during processing at increased temperatures. However, a coating may chip and subsequently expose an uncoated surface.

In some embodiments the photosensitizing additive may be distributed homogenously within the self-disinfecting material. Homogenous distribution of the photosensitizing additive within the self-disinfecting material, specifically within the bulk of the self-disinfecting material may be advantageous, as opposed to localized distribution e.g. a coating; or heterogeneous distribution within the bulk. In particular, if the self-disinfecting material is a coating applied to the writing instrument, damage to the coating may remove the coating and the subsequently exposed surface may not have a self-disinfecting mechanism. If the self-disinfecting material forms the bulk of a writing instrument part, damage to the surface of the writing instrument may lead to the formation of a new surface also comprising the photosensitizing additive and therefore the new surface may also be self-disinfecting.

In some embodiments the distribution of the photosensitizing additive may be adjusted by vibration treatment. In particular, vibration treatment may be applied to raw material comprising at least the polymer and the photosensitizing additive, to disperse the photosensitizing additive.

In some embodiments the reactive oxygen species may comprise a reactive molecule and/or free radical derived from oxygen, in particular superoxide, hydrogen peroxide, a hydroxyl radical, hydroxyl and/or nitric oxide. The reactive oxygen species generated by the conversion of oxygen may depend on the environmental conditions. For example, if molecular oxygen is present, the molecular oxygen may undergo reduction to produce superoxide. Dismutation of superoxide in the presence of protons or hydronium ions may lead to the generation of hydrogen peroxide.

As previously mentioned, the self-sterilizing material may comprise a light scattering additive. Light scattering may describe a variety of physical processes, wherein light is forced to deviate from a straight trajectory by localized non-uniformities in the medium through which they pass. Within this disclosure the term light scattering component refers to components which force light to deviate from a straight trajectory. In particular it refers to components which force the light to deviate from a straight trajectory in a random direction.

In some embodiments the light scattering component may be the polymer. Some polymers may scatter light without any form of additives. Without wishing to be bound by theory, semicrystalline polymers may comprise amorphous and crystalline domains. As a result a semicrystalline polymer may comprise non-uniformities, in particular crystalline domains, which may lead to light scattering. Therefore, the polymer itself may be a light scattering component.

In some embodiments the light scattering component may be a light scattering additive. Some polymers, e.g. amorphous polymers, may not scatter light or only to a low degree. Therefore it may be advantageous to add a light scattering additive.

In some embodiments, the light scattering component may be the polymer or the light scattering additive and/or both.

In some embodiments the light scattering additive may comprise one or more of di-2-ethylhexylphthalate, silicium dioxide, polysiloxane, titanium dioxide and/or mixtures thereof, more specifically di-2-ethylhexylphthalate, silicium dioxide, polysiloxane and/or mixtures thereof.

In some embodiments the light scattering additive may be present in the form of scattering centres, in particular in the form of particles. The light scattering centres may also take the form of bubbles or droplets.

In some embodiments the light scattering centres may be distributed homogenously within the self-disinfecting material. Homogenous distribution of the light scattering additive in the self-disinfecting material may be especially advantageous if the self-disinfecting material forms the bulk of a writing instrument part, as it may allow incident light from one side or surface of the writing instrument part to be distributed to other sides of surfaces of the writing instrument part.

In some embodiments the distribution of the light scattering centres may be adjusted by vibration treatment. In particular, vibration treatment may be applied to raw material comprising at least the polymer and the light scattering additive, to disperse the light scattering additive.

In some embodiments the photosensitizing additive may be configured to convert oxygen to a reactive oxygen species when exposed to ambient light. Ambient light within this disclosure shall refer to light present in a space, without any action on part of the user. Ambient light may be provided by natural or artificial sources of light, or mixtures thereof. It goes without saying, that a photosensitizing additive configured to convert oxygen to a reactive oxygen species when exposed to ambient light, may still convert oxygen to a reactive oxygen species when dedicatedly exposed to light for the conversion action. However, a photosensitizing agent configured to convert oxygen to a reactive oxygen species when exposed to ambient light, may not require a dedicated or specialized light source, e.g. a UV-light source, to perform its mode of action. It may be advantageous that the photosensitizing additive can convert oxygen to a reactive oxygen species when exposed to ambient light, as ambient light may be abundant in most use cases. In particular, the conversion of oxygen to a reactive oxygen species when exposed to ambient light may not require specialized equipment. This may be an advantage compared to processes requiring specialized equipment, e.g. UV-light disinfection, or autoclaving.

In some embodiments the photosensitizing additive may be configured to convert oxygen to a reactive oxygen species when exposed to visible light and/or UV-light and in particular when exposed to visible light.

In some embodiments at least part of the ambient light may be sun light and/or reflections thereof.

In some embodiments at least part of the ambient light may be emitted from an electric light, e.g. LEDs, fluorescent lamps, and/or incandescent light bulbs and/or reflections thereof.

In some embodiments the polymer may be a thermoplastic polymer. Thermoplastic polymers may be advantageous, as they are easy to process, e.g. by extrusion, which may reduce the price of manufacturing the writing instrument.

In some embodiments the polymer may be a hard polymer, in particular polystyrene, acrylonitrile butadiene styrene or polypropylene. More specifically, the polymer may be chosen from styrene homopolymers and/or copolymers of styrene, or polyolefin, such as polystyrene (i.e. polystyrene), acrylonitrile butadiene styrene or polypropylene.
The term "hard" in this disclosure shall delimit the polymer from for example soft elastomers. This may be advantageous to provide the user with a writing instrument which retains its shape when writing, in particular a writing instrument which does not bend significantly, therefore enabling a precise writing action. Further a hard polymer may be advantageous to protect a lead in a pencil or an ink cartridge in a pen.

In some embodiments the hard polymer has a Rockwell R hardness between about 60 and about 120, more specifically between about 65 and about 115, and in particular between about 70 and 110. The rockwell hardness may be measured according to the standard ISO 2039-2:2000-01.

In some embodiments polymer may be transparent or translucent. A transparent or translucent polymer may be advantageous compared to a polymer impervious to light. In particular if the self-disinfecting material forms the bulk of a writing instrument part, a transparent or translucent polymer may allow the transmittance of incident light throughout the writing instrument part, whereby it may reach the photosensitizing additive throughout the writing instrument part. The transmittance of incident light throughout the writing device may allow in particular the conversion of oxygen to reactive oxygen species to occur in areas where there is no direct exposure to light, in particular at surfaces not or insufficiently exposed to light. Of course, if the self-disinfecting material comprises further additives which absorb light, e.g. the self-disinfecting material may not be transparent or translucent.

In some embodiments the polymer may be transparent or translucent in the wavelength range of visible light, in particular between about 400 to about 800 nm.

In some embodiments the polymer may be transparent or translucent at least at one wavelength, at which the light is able to activate the photosensitizing additive to convert oxygen to a reactive oxygen species.

In some embodiments the polymer may comprise polystyrene, polyethylene or mixtures thereof.

In some embodiments the light scattering additive may be immiscible with the polymer. The term "immiscible" refers to the additive not being miscible polymer at all ratios. There may be ratios, in particular very small amounts of light scattering additive compared to the polymer, which may be miscible. It may be of interest that the light scattering additive is immiscible with the polymer, so the light scattering additive forms light scattering centres, as opposed to forming a uniform mixture with the polymer. The term "immiscible" shall not refer to the light scattering additive and the polymer being impossible to blend. An immiscible polymer and light scattering additive may still form a coherent material. The term "immiscible" shall be understood as opposed to the term "miscible", wherein "miscible" shall refer to the polymer and the light scattering additive generally forming a uniform phase.
In some embodiments the light scattering additive particles may be dispersible within the polymer.

In some embodiments the oxygen converted to a reactive oxygen species may be molecular oxygen. It may be advantageous that the oxygen converted to a reactive oxygen species is molecular oxygen, as molecular oxygen is abundant in ambient air. Further, surfaces which are contaminated with pathogens are often also surfaces in contact with ambient air. Therefore if molecular oxygen from ambient air is converted to the reactive oxygen species, this may occur in the vicinity of the pathogens that are intended to be inactivated by the reactive oxygen species.

In some embodiments the writing instrument may comprise at least one self-disinfecting surface, wherein the at least one self-disinfecting surface is configured to be in contact with ambient air. The term "self-disinfecting surface" in this disclosure shall refer to a surface where the photosensitizing additive may come in contact with oxygen from an external source, in particular in contact with oxygen from ambient air.

In some embodiments the exposure of a self-disinfecting surface to ambient air and light, may inactivate pathogens present on the self-disinfecting surface, in particular bacteria, viruses and/or fungi. An advantage of the photosensitizing agent converting oxygen to a reactive oxygen species may be that the reactive oxygen species may inactivate a variety of pathogens, as opposed to an antibiotic which may only inactivate bacteria. Further, as opposed to an antibiotic, inactivating pathogens by utilizing reactive oxygen species, may not lead to multidrug resistant pathogens, in particular multidrug resistant bacteria. Within this disclosure the term "inactivate pathogens" shall refer to altering pathogens in a way that they are not infectious anymore. This may refer e.g. to killing bacteria or inhibiting their growth, or by damaging the hull or nucleic acid of viruses.

In some embodiments at least one self-disinfecting surface or parts thereof may be exposed to light and wherein, the self-disinfecting material is configured to scatter part of the light to another self-disinfecting surface or parts thereof.

In some embodiments at least one self-disinfecting surface or parts thereof may be exposed to light and wherein, the self-disinfecting material is configured to scatter part of the light to parts of the self-disinfecting surface not directly exposed to light. As mentioned before, the light scattering component may allow the scattering of light through the self-disinfecting material. As a result, the conversion of oxygen to reactive oxygen species may occur on surfaces of writing instrument parts not directly exposed to light and hence the inactivation of pathogens on these surfaces.

In some embodiments after 60 minutes of exposure of the writing instrument to ambient light, at least 60%, more specifically at least 75% and in particular at least 90% of bacteria may be inactivated on the self-disinfecting surface. The inactivation of bacteria and in particular the rate of bacteria inactivation may depend on external influences, e.g. light intensity.

In some embodiments after 60 minutes of exposure to ambient light, at least 60%, more specifically at least 75% and in particular at least 90% of viruses may be inactivated on the surface of the self-disinfecting material in contact with ambient air. The inactivation of viruses and in particular the rate of bacteria inactivation may depend on external influences, e.g. light intensity.

In some embodiments the writing instrument may comprise one or more of the following writing instrument parts a main body, a cap, a case/sleeve, an ink cartridge, a plug and/or a click button.

In some embodiments at least one of the writing instrument parts may comprise the self-disinfecting material.

In some embodiments the writing instrument may comprise one or more of the following writing instrument parts: a main body, a cap, a case/sleeve, a lead, a plug and/or a click button.

In some embodiments at least one of the writing instrument parts may comprise the self-disinfecting material

In some embodiments the writing instrument may be a stylus. The stylus may comprise a main body.

For any previously mentioned form of writing instrument, in particular the main body may comprise the self-disinfecting material, as it may comprise the biggest surface area, in particular the biggest surface area in which may come in contact with a user. As a result, the main body may be the part which may be the most likely contaminated by pathogens and pose the highest risk for pathogen transmission.

According to a first aspect, the present disclosure relates to a process for producing writing instrument parts comprising a self-disinfecting material. The process comprises a polymer being mixed with a photosensitizing additive to create a self-disinfecting material feedstock. Optionally adding a light scattering additive to the self-disinfecting material feedstock. Optionally adjusting the position and/or volume of the photosensitizing additive and/or light scattering additive in the self-disinfecting material feedstock. Extruding or injection molding the self-disinfecting feedstock into a shape.

### Aspects

1. The writing instrument comprising:
   a self-disinfecting material,
   wherein the self-disinfecting material comprises:
      a polymer,
      a photosensitizing additive configured to convert oxygen to a reactive oxygen species when exposed to light,
      and a light scattering component.
2. The writing instrument according to aspect 1,
   wherein the photosensitizing additive comprises a metal or metal-complex, in particular a complex of a transition metal.
3. The writing instrument according to aspect 2,
   wherein the complex of a transition metal comprises a molybdenum complex, in particular hexanuclear molybdenum iodide or wherein the transition metal complex comprises a chromium complex, in particular a tris(N,N-diimine)chromium(iii) complex.
4. The writing instrument according to aspect 2,
   wherein the metal is in particular gold.
5. The writing instrument according to aspect 1,
   wherein the photosensitizing additive is from a plant source.
6. The writing instrument according to aspect 5,
   wherein the photosensitizing additive from a plant source is in particular curcumin.
7. The writing instrument according to aspect 1,
   wherein the photosensitizing additive comprises a macrocyclic organic compound.
8. The writing instrument according to aspect 1,
   wherein the photosensitizing additive is in particular crystal violet.
9. The writing instrument according to any preceding aspect,
   wherein the photosensitizing additive is present in the form of particles.
10. The writing instrument according to any preceding aspect,
   wherein the photosensitizing additive is bound to a polymer-chain, in particular by a covalent bond.
11. The writing instrument according to any preceding aspect,
   wherein polymer-chain is a polyethylene-chain or a polystyrene chain.
12. The writing instrument according to any preceding aspect,
   wherein the photosensitizing additive is distributed homogenously within the self-disinfecting material.
13. A process for manufacturing a writing instrument as defined in any one of aspects 10 to 12, wherein the distribution of the photosensitizing additive particles is adjusted by vibration treatment.
14. The writing instrument according to any preceding aspect,
   wherein the reactive oxygen species comprises a reactive molecule and/or free radical derived from oxygen, in particular superoxide, hydrogen peroxide, a hydroxyl radical, hydroxyl and/or nitric oxide.
15. The writing instrument according to any preceding aspect,
   wherein the light scattering component is the polymer.
16. A writing instrument according to any one of aspects 1 to 14,
   wherein the light scattering component is a light scattering additive.
17. The writing instrument according to aspect 16,
   wherein the light scattering additive is di-2-ethylhexylphthalate, silicium dioxide, polysiloxane, titanium dioxide and/or mixtures thereof.
18. The writing instrument according to aspects 16 or 17,
   wherein the light scattering additive is present in the form of scattering centres, in particular in the form of particles.
19. The writing instrument according to any preceding aspect,
   wherein the light scattering centres are distributed homogenously within the self-disinfecting material.
20. A process for manufacturing a writing instrument, according to aspect 19,
   wherein the distribution of the light scattering centres is adjusted by vibration treatment.
21. The writing instrument according to any preceding aspect,
   wherein the photosensitizing additive is configured to convert oxygen to a reactive oxygen species when exposed to ambient light.
22. The writing instrument according to aspect 21,
   wherein the photosensitizing additive is configured to convert oxygen to a reactive oxygen species when exposed to visible light and/or UV-light and in particular when exposed to visible light.
23. The writing instrument according to aspect 22,
   wherein at least part of the ambient light is sun light and/or reflections thereof.
24. The writing instrument according to aspect 23,
   wherein at least part of the ambient light is emitted from an electric light, e.g. LEDs, fluorescent lamps, and/or incandescent light bulbs and/or reflections thereof.
25. The writing instrument according to any preceding aspect,
   wherein the polymer is a thermoplastic polymer.
26. The writing instrument according to any preceding aspect,
   wherein the polymer is a hard polymer, in particular polystyrene, acrylonitrile butadiene styrene or polypropylene.
27. The writing instrument according to aspect 26,
   wherein the hard polymer has a Rockwell R hardness between about 60 and about 120, more specifically between about 65 and about 115, and in particular between about 70 and 110.
28. The writing instrument according to any preceding aspect,
   wherein is polymer is transparent or translucent.
29. The writing instrument according to any preceding aspect,
   wherein the polymer is transparent or translucent in the wavelength range of visible light, in particular between about 400 to about 800 nm.
30. The writing instrument according to any preceding aspect,
   wherein the polymer is transparent or translucent at least at one wavelength, at which the light is able to activate the photosensitizing additive to convert oxygen to a reactive oxygen species.
31. The writing instrument according to any preceding aspect,
   wherein the polymer comprises polystyrene, polyethylene or mixtures thereof.
32. The writing instrument according to any one of aspects 16 to 31,
   wherein the light scattering additive is immiscible with the polymer.
33. The writing instrument according to any one of aspects 16 to 32,
   wherein the light scattering additive particles are dispersible within the polymer.
34. The writing instrument according to any preceding aspect,
   wherein the oxygen converted to a reactive oxygen species, is molecular oxygen.
35. The writing instrument according to any preceding aspect,
   wherein the writing instrument comprises at least one self-disinfecting surface, wherein the at least one self-disinfecting surface is configured to be in contact with ambient air.
36. The writing instrument according to aspect 35,
   wherein the exposure of a self-disinfecting surface to ambient air and light, inactivates pathogens present on the self-disinfecting surface, in particular bacteria, viruses and/or fungi.
37. The writing instrument according to aspect 36,
   wherein at least one self-disinfecting surface or parts thereof is exposed to light and wherein, the self-disinfecting material is configured to scatter part of the light to another self-disinfecting surface or parts thereof.
38. The writing instrument according to aspect 37,
   wherein at least one self-disinfecting surface or parts thereof is exposed to light and wherein, the self-disinfecting material is configured to scatter part of the light to parts of the self-disinfecting surface not directly exposed to light.
39. The writing instrument according to any one of aspects 36 to 38,
   wherein after 60 minutes of exposure of the writing instrument to ambient light, at least 60%, more specifically at least 75% and in particular at least 90% of bacteria are inactivated on the self-disinfecting surface.
40. The writing instrument according to any one of aspects 36 to 39,
   wherein after 60 minutes of exposure to ambient light, at least 60%, more specifically at least 75% and in particular at least 90% of viruses are inactivated on the surface of the self-disinfecting material in contact with ambient air.
41. The writing instrument according to any preceding aspect,
   wherein the writing instrument comprises one or more of the following writing instrument parts:
   a main body, a cap, a case/sleeve, an ink cartridge, a plug and/or a click button.
42. The writing instrument according to aspect 41,
   wherein at least one of the writing instrument parts comprises the self-disinfecting material.
43. The writing instrument according to any one of aspects 1 to 40,
   wherein the writing instrument comprises one or more of the following writing instrument parts:
   a main body, a cap, a case/sleeve, a lead, a plug and/or a click button.
44. The writing instrument according to aspect 43,
   wherein at least one of the writing instrument parts comprises the self-disinfecting material.
45. The writing instrument according to any one of aspects 1 to 40,
   wherein the writing instrument is a stylus.
46. A process for producing writing instrument parts comprising a self-disinfecting material, comprising:
   a polymer being mixed with a photosensitizing additive to create a self-disinfecting material feedstock,
   optionally adding a light scattering additive to the self-disinfecting material feedstock, optionally adjusting the position and/or volume of the photosensitizing additive and/or light scattering additive in the self-disinfecting material feedstock,
   and extruding or injection molding the self-disinfecting feedstock into a shape.

## Claims

1. The writing instrument comprising:
a self-disinfecting material,
wherein the self-disinfecting material comprises:
a polymer,
a photosensitizing additive configured to convert oxygen to a reactive oxygen species when exposed to light,
and a light scattering component.

2. The writing instrument according to claim 1, wherein the photosensitizing additive comprises a metal or metal-complex, in particular wherein the metal complex comprises a molybdenum or chromium complex, in particular hexanuclear molybdenum iodide or wherein the metal is in particular gold.

3. The writing instrument according to claim 1, wherein the photosensitizing additive comprises a metal-complex, in particular a complex of a transition metal, in particular wherein the metal complex comprises a molybdenum complex or a chromium complex, in particular hexanuclear molybdenum iodide or a tris(N,N-diimine)chromium(iii) complex.

4. The writing instrument according to claim 1, wherein the photosensitizing additive is from a plant source, in particular curcumin.

5. The writing instrument according to any preceding claim, wherein the photosensitizing additive is bound to a polymer-chain, in particular by a covalent bond, in particular wherein the polymer-chain is a polyethylene-chain or a polystyrene chain.

6. The writing instrument according to any preceding claim, wherein the photosensitizing additive is distributed homogenously within the self-disinfecting material.

7. The writing instrument according to any preceding claim, wherein the light scattering component is the polymer.

8. A writing instrument according to any one of claims 1 to 7, wherein the light scattering component is a light scattering additive, in particular wherein the light scattering additive is di-2-ethylhexylphthalate, silicium dioxide, polysiloxane, titanium dioxide and/or mixtures thereof.

9. The writing instrument according to any preceding claim, wherein the polymer is a thermoplastic polymer, in particular wherein the polymer is a hard polymer, in particular polystyrene, acrylonitrile butadiene styrene or polypropylene.

10. The writing instrument according to any preceding claim, wherein the polymer is transparent or translucent, in particular wherein the polymer is transparent or translucent at least at one wavelength, at which the light is able to activate the photosensitizing additive to convert oxygen to a reactive oxygen species.

11. The writing instrument according to any one of claims 7 to 10, wherein the light scattering additive particles are dispersible within the polymer.

12. The writing instrument according to any preceding claim, wherein the oxygen converted to a reactive oxygen species is molecular oxygen.

13. The writing instrument according to any preceding claim,
wherein the writing instrument comprises at least one self-disinfecting surface, wherein the at least one self-disinfecting surface is configured to be in contact with ambient air, wherein the exposure of a self-disinfecting surface to ambient air and light, inactivates pathogens present on the self-disinfecting surface, in particular bacteria, viruses and/or fungi.

14. The writing instrument according to any preceding claim, wherein the writing instrument comprises one or more of the following writing instrument parts: a main body, a cap, a case/sleeve, an ink cartridge, a lead, a plug and/or a click button.

15. A process for producing writing instrument parts comprising a self-disinfecting material, comprising:
a polymer being mixed with a photosensitizing additive to create a self-disinfecting material feedstock,
optionally adding a light scattering additive to the self-disinfecting material feedstock,
optionally adjusting the orientation, position and/or volume of the photosensitizing additive and/or light scattering additive in the self-disinfecting material feedstock,
and extruding or injection molding the self-disinfecting feedstock into a shape.
